# EUROPEAN PATENT APPLICATION

(11) **EP 4 082 773 A1**
(43) Date of publication of application: **02.11.2022**
(21) Application number: 20907717.1
(22) Date of filing: 10.12.2020
(51) Int. Cl.: B32B 23/04, B32B 1/02, A01G 9/14, A01G 13/02, B32B 7/023

(54) **AGRICULTURAL DAYLIGHTING MEMBER AND AGRICULTURAL BOX**

(30) Priority: 25.12.2019 JP 2019234983
(71) Applicant: FUJIFILM Corporation, Tokyo 106-8620 (JP)
(72) Inventor: WASHIYA, Kimito, ashigara-shi, Kanagawa 250-0193 (JP); KATANO, Shogo, ashigara-shi, Kanagawa 250-0193 (JP); FUJIHARA, Yusuke, ashigara-shi, Kanagawa 250-0193 (JP)
(74) Representative: Hoffmann Eitle
(86) International application number: PCT/JP2020/046054
(87) International publication number: WO 2021/131745

(57) **Abstract**

Provided are an agricultural daylighting member capable of efficiently introducing light and an agricultural box.

A greenhouse has a daylighting member (12) supported by a frame. The daylighting member (12) partitions a growing space for agricultural products from an outside world, and emits light, which has entered from a light incident surface on one side, from a light emitting surface on the other side. The daylighting member (12) has a transparent substrate layer (20) and a transparent light emitting layer (24) provided closer to a light emitting surface side than the substrate layer (20). The light emitting layer (24) has a refractive index of 1.54 or less, water absorbability, and an equilibrium moisture content of 10% or greater at 25°C and a relative humidity of 80%.

## Description

### BACKGROUND OF THE INVENTION

### 1. Field of the Invention

The present invention relates to an agricultural daylighting member and an agricultural box.

### 2. Description of the Related Art

Greenhouses provided with a transparent daylighting member (agricultural daylighting member) partitioning a growing space for agricultural products from the outside world have been widely known as an agricultural box. The daylighting member is formed into a plate shape or a sheet shape, and is supported by being attached to a frame or the like. The light from a light source (for example, the sun) is introduced into the greenhouse through the daylighting member. The daylighting member has been contrived in various manners in order to efficiently introduce the light. For example, JP2008-225466A discloses a technology related to antireflection and antifogging coating, and by applying such a coating to an outer surface (light incident surface of a daylighting member on which light is incident) of a greenhouse, it is possible to suppress the light loss on the light incident surface of the daylighting member.

### SUMMARY OF THE INVENTION

However, in JP2008-225466A, the coating is provided to be applied to the light incident surface of the daylighting member, and it can suppress the light loss on the light incident surface of the daylighting member, but does not take into consideration the light loss occurring during emission of the light incident on the daylighting member into the greenhouse. Therefore, the coating is still unsatisfactory for efficiently introducing the light into the greenhouse.

That is, on an inner surface (light emitting surface of the daylighting member) of the greenhouse, moisture may be generated from agricultural products which are cultivated, condensation may occur on the inner surface of the house where the generated moisture is cooled by the outside air, and the light loss may occur due to scattering caused by the condensation. In a case where the technology of JP2008-225466A for preventing fogging and reflection is applied to an outer surface (light incident surface of a daylighting member) of a greenhouse, the technology is not effective against the light loss due to condensation occurring on an inner surface of the house, and in a case where water droplets or a water film form due to condensation, the antifogging effect and the antireflection effect are not sufficient. Therefore, the technology is unsatisfactory for preventing the problems due to the condensation on the inner surface of the greenhouse.

In addition, in a case where condensation occurs on an inner surface of a greenhouse provided with a daylighting member, e.g., in a case where the altitude (elevation angle) of the sun is low such as in a high latitude region and/or in winter, there is a problem that in a case where the light incident on the daylighting member is emitted from the daylighting member, it is reflected by a light emitting surface of the daylighting member or scattered due to the condensation, and cannot thus be emitted into the greenhouse. However, JP2008-225466A does not consider such a problem.

The present invention is contrived in view of the above problems, and an object thereof is to provide an agricultural daylighting member which efficiently emits light, which has entered the daylighting member, thereby being capable of efficiently introducing the light into a greenhouse (agricultural box), and an agricultural box.

An agricultural daylighting member according to an aspect of the present invention which partitions a growing space for agricultural products from an outside world, and emits light, which has entered from a light incident surface on one side, from a light emitting surface on the other side, has: a transparent substrate layer; and a transparent light emitting layer provided closer to a light emitting surface side than the substrate layer, and the light emitting layer has water absorbability.

The light emitting layer preferably has a refractive index of 1.54 or less.

The light emitting layer preferably has an equilibrium moisture content of 10% or greater at 25°C and a relative humidity of 80%.

The substrate layer preferably has an equilibrium moisture content of 2% or less at 25°C and a relative humidity of 80%.

An interlayer having an equilibrium moisture content of greater than 2% and less than 10% at 25°C and a relative humidity of 80% is preferably provided between the light emitting layer and the substrate layer.

The light emitting layer is preferably formed of cellulose.

The light emitting layer is preferably formed by saponifying cellulose triacetate.

The light emitting layer preferably has a thickness of 100 µm or larger and 2,000 µm or smaller.

An agricultural box according to an aspect of the present invention includes: the above-described agricultural daylighting member; and a frame which supports the agricultural daylighting member.

According to the present invention, light which has entered an agricultural daylighting member is efficiently emitted, and thus it is possible to efficiently introduce the light into a greenhouse (agricultural box).

### BRIEF DESCRIPTION OF THE DRAWINGS

Fig. 1 is a schematic perspective view of a greenhouse.
Fig. 2 is an illustration showing an aspect in which a daylighting member is fixed to aggregates.
Fig. 3 is an illustration of a layer configuration of the daylighting member.
Fig. 4 is an illustration showing an aspect in which the daylighting member is extended to the aggregates.
Fig. 5 is an illustration showing a method of verifying an elevation angle and light transmittance with a difference in daylighting member.
Fig. 6 is an illustration showing a method of verifying differences in illuminance with a difference in daylighting member.
Fig. 7 is a graph showing verification results of differences in illuminance with a difference in daylighting member.

### DESCRIPTION OF THE PREFERRED EMBODIMENTS

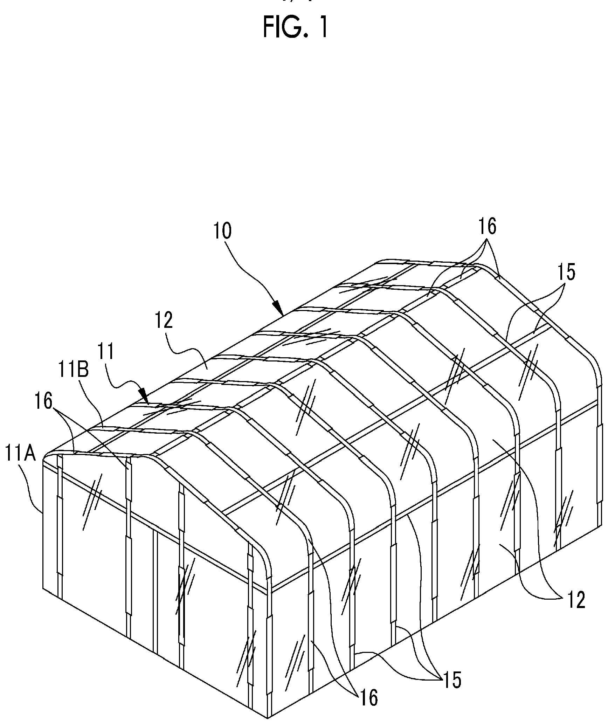

A greenhouse (agricultural box) 10 shown in Fig. 1 includes a frame 11 and plate-shaped daylighting members (agricultural daylighting members) 12. The frame 11 is provided to support the daylighting member 12, and is three-dimensionally formed by assembling a plurality of aggregates 15. The aggregates 15 are formed to have a long length, and these aggregates 15 are fixed to each other by, for example, fittings for connection and fixing (not shown).

The frame 11 is provided with a rectangular body portion 11A and a triangular mountain-shaped roof 11B provided on the body portion 11A. The shape of the frame is not limited to this example. For example, the roof may be a so-called dome which is arched, or may have a horizontally flat shape or an inclined shape whose height gradually decreases in one direction. In the frame 11, the number of aggregates 15, the direction of each aggregate 15, and the assembling method are not particularly limited.

As the aggregate 15, a known material for greenhouses can be used. From the viewpoint of durability (strength), the aggregate is preferably made of a metal, and examples thereof include a solid steel material and a hollow steel pipe. In this example, a steel pipe is used.

The daylighting member 12 is attached to and supported by the frame 11 to form a space (a space for growing agricultural products) partitioned from the outside world. The daylighting member 12 emits the light from the sun (light source), which has entered from a light incident surface (a surface facing the outside of the greenhouse 10) on one side, from a light emitting surface (a surface facing the inside of the greenhouse 10) on the other side. The daylighting member 12 may be attached to either the inside or the outside of the frame 11. In this example, the daylighting member is attached to the outside. This is because it is easier to attach the daylighting member to the outside of the frame 11 than to the inside. The daylighting member 12 according to the embodiment of the present invention is preferably used for a roof portion of the greenhouse. This is because the roof portion has a large area as a daylighting area of the greenhouse, and in a case where the altitude (elevation angle) of the sun is low such as in a high latitude region and/or in winter, the daylighting effect further increases.

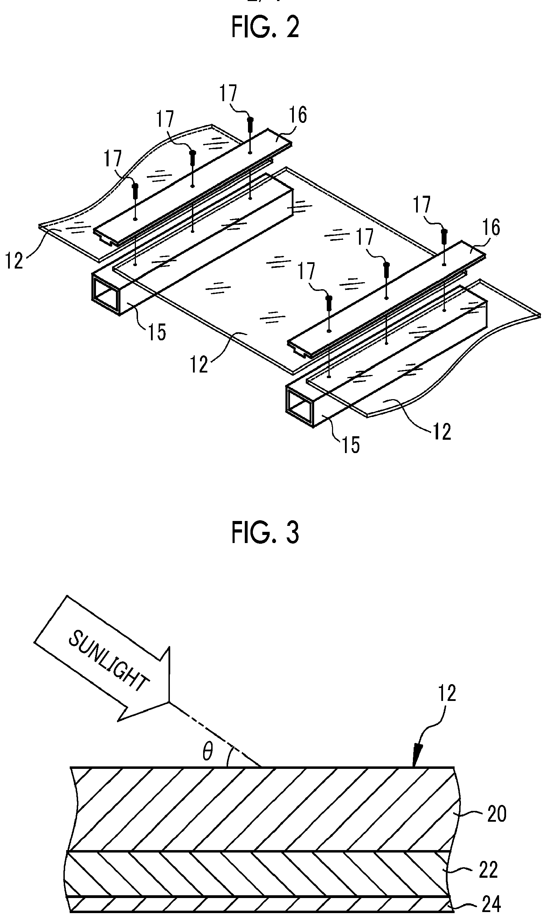

As shown in Fig. 2, the daylighting member 12 is held between the aggregate 15 and a pressing member 16. The pressing member 16 is fixed to the aggregate 15 by screws 17. The method of fixing the daylighting member 12 is not limited to this example, and can be appropriately selected. For example, the pressing member 16 may not be provided, and the daylighting member may be directly screwed to the aggregate 15. The daylighting member may be adhered to the aggregate 15 by using an adhesive or an adhesive tape.

As shown in Fig. 3, the daylighting member 12 is transparent, and is provided with a substrate layer 20, an interlayer 22, and a light emitting layer 24. "Transparent" means that the member (daylighting member 12 in this example) has a light-transmitting property, and the light-transmitting property (light transmittance) is so high that the opposite side can be seen through the member.

The substrate layer 20 is provided closer to the light incident surface side (outside of the greenhouse 10) of the daylighting member 12 than the interlayer 22 and the light emitting layer 24. The substrate layer 20 is formed of, for example, glass, polycarbonate (PC), acryl, thermoplastic polyurethane (TPU), or the like. The substrate layer 20 has a function of imparting a strength to the daylighting member in a case where the daylighting member 12 is installed on the frame 11 and year-round cultivation is performed in the greenhouse under the outdoor environment. In addition, the substrate layer 20 has an equilibrium moisture content of 2% or less at 25°C and a relative humidity of 80%. This is because in a case where the equilibrium moisture content is 2% or less, the deformation of the daylighting member due to the reduction of the strength of the daylighting member or the expansion and contraction of the substrate layer is small. The temperature of 25°C and the relative humidity of 80% correspond to the temperature and the relative humidity which are normally set as the cultivation environment for the plant. The thickness of the substrate layer 20 is preferably 10 µm or larger and 10,000 µm or smaller. This is because a strength can be imparted to the substrate layer, and a suitable weight for a case where the daylighting member is installed on the frame is obtained. The thickness is more preferably 20 µm or larger and 7,000 µm or smaller, and particularly preferably 30 µm or larger and 5,000 µm or smaller.

The interlayer 22 is provided closer to the light emitting surface side (inside of the greenhouse 10) of the daylighting member 12 than the substrate layer 20, and in this example, the interlayer 22 is provided adjacent to and in close contact with the substrate layer 20. The interlayer 22 is formed of, for example, cellulose acylate, polyamide, an adhesive for attaching the light emitting layer 24 to the substrate layer 20, or the like. In addition, the interlayer 22 has an equilibrium moisture content of greater than 2% and less than 10% at 25°C and a relative humidity of 80%. In a case where the equilibrium moisture content is 2% or greater, the refractive index changes in a stepwise manner and the light loss is suppressed. In addition, in a case where the equilibrium moisture content is less than 10%, the deformation of the light emitting layer and the like due to a difference in expansion and contraction between the light emitting layer 24 and the substrate layer 20 can be suppressed. The thickness of the interlayer 22 is preferably 1 µm or larger and 500 µm or smaller, and more preferably 5 µm or larger and 300 µm or smaller.

The light emitting layer 24 is provided further inside the greenhouse 10 than the interlayer 22, and in this example, the light emitting layer is provided adjacent to and in close contact with the interlayer 22. The light emitting layer 24 is formed of, for example, cellulose (saponified cellulose, cellophane, or the like), polyvinyl alcohol (PVA), or the like. In addition, the light emitting layer 24 has a refractive index of 1.54 or less, and an equilibrium moisture content of 10% or greater at 25°C and a relative humidity of 80%. Moreover, the light emitting layer 24 is formed to have a thickness of 0.1 µm or larger and 50 µm or smaller. The thickness of the light emitting layer 24 is more preferably 0.5 µm or larger and 30 µm or smaller, and particularly preferably 1 µm or larger and 20 µm or smaller. The light emitting layer 24 and the interlayer 22 may be separately formed, or may be formed so that the composition continuously changes from the light emitting layer to the interlayer.

As described above, the light emitting layer 24 has water absorbability (in this example, the equilibrium moisture content at 25°C and a relative humidity of 80% is 10% or greater). In a case of a daylighting member whose light emitting layer is disposed as an inner surface of the house in the greenhouse 10, moisture condenses on the light emitting surface due to the release of the moisture by the plants in the house and/or a temperature difference between the inner surface of the greenhouse at a high temperature and the outer surface at a low temperature, the moisture is absorbed by an increase in equilibrium moisture content of the light emitting layer, and the condensation or the formation of a water film occurs on the light emitting surface. Since the light emitting layer 24 absorbs the water, the refractive index change between the layers is gentle from the substrate layer 20 toward the inside of the greenhouse 10. In addition, the light emitting layer 24 maintains a water film on the light emitting surface due to its water absorbability, and suppresses the condensation on the light emitting surface.

That is, in a case where the refractive index of the substrate layer 20 formed of the above-described material is about 1.5, and the substrate layer 20 is in direct contact with the air (refractive index: about 1.0) in the greenhouse 10, the difference in refractive index between the layers is about 0.5. Regarding this, in the present invention, the light emitting layer 24 whose refractive index is reduced by water absorption and approaches the refractive index of the water (refractive index: about 1.3) is disposed between the substrate layer 20 and the air in the greenhouse 10. Furthermore, a water film may be formed on a surface (a surface on the inside of the greenhouse 10) of the light emitting layer 24. Therefore, the difference in refractive index between the layers is smaller than in a case where the substrate layer 20 is in direct contact with the air in the greenhouse 10. Accordingly, in the related art, in a case where condensation occurs on the light emitting surface, there is an influence of the condensation (light loss due to scattering or the like), but according to the present invention, even in a case where condensation occurs on the light emitting surface, light loss is suppressed, and the loss of light (reflection in a case where light passes through the layers) from the substrate layer 20 toward the inside of the greenhouse 10 is further suppressed than in a case where the substrate layer 20 is in direct contact with the air in the greenhouse 10. In the daylighting member according to the embodiment of the present invention, by suppressing the light loss (reflection in a case where light passes through the layers) due to the moisture contained in the light emitting surface and/or the formation of a water film, the reduction of light quantity in the house is suppressed or improved in a case where condensation occurs or a water film is formed on the light emitting surface of the daylighting member of the greenhouse. In addition, scattered light is suppressed by suppressing the influence of the condensation (light loss due to scattering or the like) on the light emitting surface. Thanks to such an effect, in a case where the present invention is used as a daylighting member of a box (greenhouse) for cultivating plants, the daylighting effect increases in a case where the elevation angle of light is small (corresponding to a case where the altitude (elevation angle) of the sun is low such as in a high latitude region and/or in winter) or the light is scattered light.

Furthermore, in this example, the interlayer 22 is provided between the light emitting layer 24 and the substrate layer 20, and the interlayer 22 also has water absorbability. In addition, the interlayer 22 has lower water absorbability than the light emitting layer 24 (the equilibrium moisture content at 25°C and a relative humidity of 80% is greater than 2% and less than 10%). That is, since the reduction of the refractive index due to water absorption is smaller in the interlayer 22 than in the light emitting layer 24, and the interlayer 22 and the light emitting layer 24 absorb the water, the refractive index of the interlayer 22 becomes a value between those of the substrate layer 20 and the light emitting layer 24. Therefore, the refractive index change between the layers is gentler between the substrate layer 20 and the light emitting layer 24 than in a case where the interlayer 22 is not provided. Accordingly, the above-described effect, that is, the effect of suppressing the loss of light from the substrate layer 20 toward the inside of the greenhouse 10 is more remarkably exhibited.

As the polymer (resin) used for the interlayer 22 and/or the light emitting layer 24, any one of cellulose acylate, polyurethane, polyamide, a polyvinyl alcohol-based polymer, a polyacrylamide derivative, or a polyacrylonitrile derivative is preferably used.

In a case where cellulose is used to form the interlayer 22 and/or the light emitting layer 24, cellulose acylate is preferably used as the cellulose. The reasons for this are as follows: since cellulose acylate has high transparency, light (sunlight) from a light source (the sun) is effectively applied into the greenhouse 10; and the light emitting layer 24 adjacent to the interlayer 22 is easily formed by a saponification treatment.

Cellulose acylate has an acyl group since a hydroxy group of cellulose is esterified with a carboxylic acid. The cellulose acylate is not particularly limited, and the acyl group substitution degree of the cellulose acylate is preferably within a range of 2.00 to 2.97. Accordingly, the loss of light toward the inside of the greenhouse 10 is securely suppressed to a small level. The lower the acyl group substitution degree, the larger the content of moisture to be absorbed, so that deformation due to water absorption is likely to occur. The acyl group substitution degree of the cellulose acylate is preferably 2.00 or higher since it is possible to more securely suppress the deformation. In theory, the upper limit of the acyl group substitution degree is 3.00. However, cellulose acylate having an acyl group substitution degree which is higher than 2.97 is not easily synthesized. Therefore, the acyl group substitution degree of the cellulose acylate is adjusted to 2.97 or less.

The acyl group substitution degree of the cellulose acylate is more preferably within a range of 2.40 to 2.95, and even more preferably within a range of 2.70 to 2.95. As is well known, the acyl group substitution degree is a rate of esterification of the hydroxy group of cellulose with a carboxylic acid, that is, the degree of substitution of an acyl group.

The acyl group of the cellulose acylate is not particularly limited, and may be an acetyl group having 1 carbon atom, or an acyl group having 2 or more carbon atoms. The acyl group having 2 or more carbon atoms may be an aliphatic group or an aryl group, and examples thereof include an alkylcarbonyl ester, an alkenylcarbonyl ester, an aromatic carbonyl ester, or an aromatic alkylcarbonyl ester of cellulose, and each of them may further have a substituted group. Examples thereof include a propionyl group, a butanoyl group, a pentanoyl group, a hexanoyl group, an octanoyl group, a decanoyl group, a dodecanoyl group, a tridecanoyl group, a tetradecanoyl group, a hexadecanoyl group, an octadecanoyl group, an iso-butanoyl group, a t-butanoyl group, a cyclohexanecarbonyl group, an oleoyl group, a benzoyl group, a naphthylcarbonyl group, and a cinnamoyl group.

The cellulose acylate may have only one kind of acyl group or two or more kinds of acyl groups, and at least one kind is preferably an acetyl group. In a case where the cellulose acylate has an acetyl group, the moisture is easily absorbed, and thus the effect of suppressing a humidity change in the greenhouse 10 is improved. Most preferable is cellulose acylate in which all acyl groups are acetyl groups. That is, the cellulose acylate is more preferably cellulose acetate. In this example, TAC (cellulose triacetate) is used.

The acyl group substitution degree can be obtained by a conventional method. For example, an acetylation degree (acetyl group substitution degree) is obtained according to the measurement and calculation of the acetylation degree in ASTM: D-817-91 (testing methods for cellulose acetate, etc.). In addition, the acyl group substitution degree can be measured by measuring a distribution of an acylation degree (acyl group substitution degree) by high-performance liquid chromatography. As an example of this method, in the measurement of an acetylation degree of cellulose acetate, a sample is dissolved in methylene chloride, and using a column Novapac phenyl (Waters Corporation), a distribution of an acetylation degree is measured by a linear gradient from a mixed liquid (mass ratio of methanol:water is 8:1) of methanol and water which is an eluant to a mixed liquid (mass ratio of dichloromethane:methanol is 9:1) of dichloromethane and methanol, and compared with a calibration curve obtained from a standard sample having a different acetylation degree. These measurement methods can be obtained with reference to the methods described in JP2003-201301A. In a case where the cellulose acylate layer 41 contains an additive, the acetylation degree of cellulose acylate is preferably measured by high-performance liquid chromatography.

The interlayer 22 and/or the light emitting layer 24 may contain other components in addition to the cellulose acylate. The content of components other than the cellulose acylate by mass is preferably 0 or greater and 50 or less under the assumption that the mass of the cellulose acylate is 100. Examples of other components include an additive. Examples of the additive include an ultraviolet absorber, a plasticizer, and a matting agent.

Examples of the plasticizer include a sugar ester derivative and an ester oligomer. By using a plasticizer, the moisture content of the cellulose acylate can be adjusted, and the light emitting layer 24 adjacent to the interlayer 22 can be easily formed by saponification or the like.

The sugar ester derivative may be either a monosaccharide ester derivative or a polysaccharide ester derivative, or both. Examples of the sugar include monosaccharides such as glucose, galactose, mannose, fructose, xylose and arabinose, and polysaccharides such as lactose, sucrose, nystose, IF-fructosyl nystose, stachyose, maltitol, lactitol, lactulose, cellobiose, maltose, cellotriose, maltotriose, raffinose or kestose, gentiobiose, gentiotriose, gentiotetraose, xylotriose, and galactosyl sucrose. Glucose, fructose, sucrose, kestose, nystose, IF-fructosyl nystose, stachyose and the like are preferable, and sucrose and glucose are more preferable. Oligosaccharides can also be used as polysaccharides, and are manufactured by allowing enzymes such as amylase to act on starch, sucrose, or the like. Examples of the oligosaccharides include maltooligosaccharide, isomalto-oligosaccharide, fructo-oligosaccharide, galacto-oligosaccharide, and xylo-oligosaccharide.

The monocarboxylic acid which is used for esterifying all or a part of the OH groups in the monosaccharide or polysaccharide structure is not particularly limited, and known aliphatic monocarboxylic acids, alicyclic monocarboxylic acids, aromatic monocarboxylic acids, and the like can be used. As a carboxylic acid to be used, one or two or more kinds of carboxylic acids may be used.

Preferable examples of the aliphatic monocarboxylic acids include saturated fatty acids such as an acetic acid, a propionic acid, a butyric acid, an isobutyric acid, a valeric acid, a caproic acid, an enanthic acid, a caprylic acid, a pelargonic acid, a capric acid, a 2-ethyl-hexane carboxylic acid, an undecyl acid, a lauric acid, a tridecylic acid, a myristic acid, a pentadecylic acid, a palmitic acid, a heptadecylic acid, a stearic acid, a nonadecanoic acid, an arachic acid, a behenic acid, a lignoceric acid, a cerotic acid, a heptacosanoic acid, a montanic acid, a melissic acid, and a lacceric acid, unsaturated fatty acids such as an undecylenic acid, an oleic acid, a sorbic acid, a linoleic acid, a linolenic acid, an arachidonic acid, and an octenoic acid, and alicyclic monocarboxylic acids such as a cyclopentanecarboxylic acid, a cyclohexanecarboxylic acid, and a cyclooctanecarboxylic acid.

Preferable examples of the aromatic monocarboxylic acids include aromatic monocarboxylic acids such as a benzoic acid and a toluic acid in which an alkyl group or an alkoxy group is introduced to a benzene ring of a benzoic acid, aromatic monocarboxylic acids such as a cinnamic acid, a benzilic acid, a biphenylcarboxylic acid, a naphthalenecarboxylic acid, and a tetralincarboxylic acid which have two or more benzene rings, and derivatives thereof, and a benzoic acid and a naphthylic acid are particularly preferable.

Specific examples of the sugar ester include a sucrose ester derivative, and more specific examples thereof include a benzoic acid ester (MONOPET (registered trademark) SB manufactured by DKS Co. Ltd.).

The ester oligomer is a compound having a repeating unit containing an ester bond of a dicarboxylic acid and a diol, and having such a relatively low molecular weight that about several to 100 repeating units are contained, and is preferably an aliphatic ester oligomer. This is because the cellulose acylate acts as a plasticizer more reliably than an aromatic ester oligomer.

The ester oligomer preferably has a molecular weight within a range of 500 to 10,000. The reason for this is that in a case where the molecular weight is 500 or greater, the flexibility (flexibility) or heat sealability is improved as compared to a case where the molecular weight is less than 500, and in a case where the molecular weight is 10,000 or less, the compatibility with the cellulose acylate is reliable as compared to a case where the molecular weight is greater than 10,000. The molecular weight of the ester oligomer is more preferably within a range of 700 to 5,000, and even more preferably within a range of 900 to 3,000.

The molecular weight of the ester oligomer has a molecular weight distribution, and thus it can be obtained by the weight-average molecular weight or number-average molecular weight obtained by gel permeation chromatography (GPC), the number-average molecular weight measurement method using terminal functional group amount measurement or osmotic pressure measurement, the viscosity-average molecular weight obtained by viscosity measurement, or the like. In this embodiment, the number-average molecular weight measurement method using measurement of a hydroxyl group or an acid group of an ester as a terminal functional group is used.

In the ester oligomer, the dicarboxylic acid preferably has 2 to 10 carbon atoms, and the diol more preferably has 2 to 10 carbon atoms. In particular, both of the dicarboxylic acid and the diol are preferably aliphatic compounds. The reason for this is that using an aliphatic dicarboxylic acid and an aliphatic diol, flexibility can be imparted, and a more preferable moisture content is obtained. Examples of the dicarboxylic acid include aromatic carboxylic acids such as a phthalic acid, a terephthalic acid, and an isophthalic acid, and aliphatic carboxylic acids such as a malonic acid, a succinic acid, a glutaric acid, an adipic acid, a sebacic acid, an azelaic acid, a cyclohexanedicarboxylic acid, a maleic acid, and a fumaric acid. Examples of the aliphatic diol include ethanediol, 1,2-propanediol, 1,3-propanediol, 1,2-butanediol, 1,3-butanediol, 2-methyl-1,3-propanediol, 1,4-butanediol, 1,5-pentanediol, 2,2-dimethyl-1,3-propanediol (neopentyl glycol), 1,4-hexanediol, 1,4-cyclohexanediol, and 1,4-cyclohexanedimethanol. It is also preferable that the terminal hydroxyl group or acid group of the ester oligomer is sealed with a monocarboxylic acid or a monoalcohol. Among these, an oligomer having an ester of an adipic acid and an ethylene glycol as a repeating unit, an oligomer having an ester of a succinic acid and an ethylene glycol as a repeating unit, and an oligomer having an ester of a terephthalic acid and an ethylene glycol and an ester of a phthalic acid and an ethylene glycol as a repeating unit are preferable.

The mass of a monosaccharide ester derivative is represented by M1, the mass of a polysaccharide ester derivative is represented by M2, the mass of an ester oligomer is represented by M3, and the sum of masses (hereinafter, referred to as the mass sum) obtained by M1+M2+M3 is represented by MP. In a case where at least one of a monosaccharide ester derivative, a polysaccharide ester derivative, or an ester oligomer is contained, the mass sum MP is preferably within a range of 5 to 30 under the assumption that the mass of the cellulose acylate is 100. In a case where the mass sum MP is 5 or greater, more excellent flexibility is obtained than in a case where the mass sum is less than 5. In a case where the mass sum MP is 30 or less, a more preferable moisture content is obtained than in a case where the mass sum MP is greater than 30.

As the polyurethane, a commercially available product can be used. Specifically, two-component curing type polyurethanes and thermoplastic polyurethane elastomers of an ester (adipate) type, an ester (lactone) type, an ether type, a polycarbonate type, an aliphatic non-yellowing type, and the like can be used. Examples of commercially available products include PANDEX (registered trademark) GW series "GW-3670/HX-770" (manufactured by DIC Corporation) of a system for a two-component curing type continuous coating urethane film; ELASTOLLAN (registered trademark) C80A, C85A, C90A, C95A, C64D, 1180A, 1185A, 1190A, 1195A, 1164D, ET385, ET880, ET885, ET890, ET858D, ET860D, ET864D, NY585, NY90A, and NY1197A (manufactured by BASF Japan, Ltd.) as thermoplastic polyurethane elastomers; PANDEX (registered trademark) T-5105, T-5201, T-5265, T-5102, T-8175, T-8180, T-8185, T-8190, T-8195, DP9370A, 5377A, 588, KU2-8659, and DP5094A (manufactured by DIC Covestro Polymer, Ltd.); and RESAMINE (registered trademark) P-1000, P-7000, and P-2000 series (manufactured by Dainichiseika Color & Chemicals Manufacturing Co., Ltd.). Two or more kinds of urethane elastomers may be used in combination. Alternatively, a commercially available polyurethane film may also be used. Specific examples include TOUGH GRACE (registered trademark) manufactured by Takeda Sangyo Co., Ltd.

Examples of the polyamide include polyamides such as nylon 6 obtained by ring-opening polymerization of ε-caprolactam, and nylon 66 obtained by polycondensation of hexamethylenediamine and adipic acid. In addition, a commercially available polyamide film may also be used. Specific examples thereof include KOHBARRIER (registered trademark) ONY manufactured by Kohjin Film & Chemicals Co., Ltd., and HARDEN (registered trademark) film NAP02 manufactured by Toyobo Co., Ltd.

Examples of the polyvinyl alcohol-based polymer include polyvinyl alcohol, a copolymer of polyvinyl alcohol and polyvinyl acetate based on partial saponification of polyvinyl acetate, a copolymer of polyvinyl alcohol and ethylene, and modified polyvinyl alcohol.

The polyvinyl alcohol-based polymer is also preferably a partially saponified polyvinyl alcohol-based polymer. From the viewpoint of antifogging property, the degree of saponification of the partially saponified polyvinyl alcohol-based polymer is preferably 80 mol% or greater and less than 98 mol%, more preferably 80 mol% to 95 mol%, even more preferably 85 mol% to 95 mol%, and particularly preferably 88 mol% to 95 mol%. The degree of saponification of the partially saponified polyvinyl alcohol-based polymer can be appropriately adjusted as an equilibrium moisture content suitable for the interlayer 22 and/or the light emitting layer 24. The degree of saponification is measured according to the method described in JIS K 6726: 1994.

The modified polyvinyl alcohol is a compound (also referred to as the polyvinyl alcohol derivative) in which polyvinyl alcohol is partially modified. Examples of the modified polyvinyl alcohol include acetoacetyl-modified polyvinyl alcohol, carboxy-modified polyvinyl alcohol, and silanol-modified polyvinyl alcohol. Among these, acetoacetyl-modified polyvinyl alcohol is preferable as the polyvinyl alcohol-based polymer.

It is also preferable that the polyvinyl alcohol-based polymer has a crosslinking structure by reacting with at least one crosslinking agent selected from the group consisting of a melamine resin, a blocked isocyanate, and a metal chelate. This is because the polymer is unlikely to be eluted in a case where condensation occurs on the light emitting surface. Since a crosslinking structure is easily formed, it is more preferable that the modified polyvinyl alcohol is contained.

The polyvinyl alcohol-based polymer may be a commercially available product. As the polyvinyl alcohol-based polymer, for example, POVAL (for example, PVA-205 (degree of saponification: 86.5 mol% to 89 mol%) and PVA-220 (degree of saponification: 87 mol% to 89 mol%)) manufactured by Kuraray Co., Ltd., and GOHSENX (registered trademark, the same hereinafter. For example, Z-100 (degree of saponification: 98.5 mol% or greater), Z-200 (degree of saponification: 99 mol% or greater), and Z-220 (degree of saponification: 90.5 mol% to 92.5 mol% or greater)) manufactured by NIPPON SYNTHETIC CHEMICAL INDUSTRY CO., LTD. are available.

Many polymers have pressure sensitive adhesiveness, and in particular, the above-described polyurethane, polyvinyl alcohol-based polymer, and the like have pressure sensitive adhesiveness in many cases. Therefore, in a case where the daylighting member 12 is formed of the polymer having pressure sensitive adhesiveness, the daylighting member is easily attached to the frame 11 and/or adhere to the adjacent layer. That is, in a case where the substrate layer 20 has pressure sensitive adhesiveness (is formed of a polymer having pressure sensitive adhesiveness), the substrate layer 20 is easily attached to the inside of the frame 11 and easily adhered to the interlayer 22. In addition, in a case where the interlayer 22 has pressure sensitive adhesiveness, it is easily adhered to the substrate layer 20 and the light emitting layer 24. Furthermore, in a case where the light emitting layer 24 has pressure sensitive adhesiveness, the substrate layer 20 is easily attached to the outside of the frame 11 and easily adhered to the interlayer 22.

The light emitting layer 24 may be formed separately from the interlayer 22 (or the substrate layer 20) and adhered to the interlayer 22 (or the substrate layer 20). However, the light emitting layer can also be formed by saponifying a surface (a surface on the inside of the greenhouse 10) of the interlayer 22. In a case where cellulose acylate is used as the interlayer 22 and the light emitting layer 24 is formed by saponifying a surface of the interlayer 22, the formed light emitting layer 24 is also formed of cellulose acylate. Depending on the degree of saponification, the light emitting layer 24 may contain cellulose. That is, the light emitting layer 24 formed by saponifying a surface of the cellulose acylate (interlayer 22) is formed of cellulose acylate and/or cellulose. The cellulose acylate can be saponified by bringing it into contact with an aqueous solution of sodium hydroxide and/or potassium hydroxide.

A saponification solution preferably contains, in addition to alkali and water, one or two or more kinds selected from the group consisting of alcohols, ethers, amides, and sulfoxides as an organic solvent. This is because in a case where an organic solvent is contained, a thick light emitting layer 24 can be formed on the cellulose acylate, the equilibrium moisture content, the refractive index, and the like are continuously changed from the light emitting layer 24 to the interlayer 22, and the light emitting layer has a good light-transmitting property. As the alcohols, alcohols having 2 or more and 8 or less carbon atoms are preferable. Examples of the alcohols having 2 or more and 8 or less carbon atoms include ethanol, isopropyl alcohol, 1-propanol, 1-butanol, hexanol, ethylene glycol, glycerin, propylene glycol, butylene glycol, and pentaerythritol. Among these, isopropyl alcohol is particularly preferable, and is also used in this embodiment. Examples of the ethers include diethyl ether, diethylene glycol, dipropylene glycol, ethylene glycol monomethyl ether, ethylene glycol monoethyl ether, diethylene glycol monomethyl ether, diethylene glycol monoethyl ether, and propylene glycol monomethyl ether. Examples of the amides include N,N-dimethylformamide and dimethylacetamide. Examples of the sulfoxides include dimethylsulfoxide.

The thickness of the light emitting layer 24 formed by saponification is preferably within a range of 0.1 µm to 20 µm, more preferably within a range of 0.5 µm to 15 µm, and particularly preferably within a range of 2 µm to 12 µm. In this embodiment, the thickness of the light emitting layer is obtained by the following method. A sample sampled from a material formed of an interlayer 22 and a light emitting layer 24 obtained by saponifying a film substrate is dipped in dichloromethane for 24 hours. The remaining sample not dissolved by the dipping is dried, and the thickness of the dried sample is measured three times. The average of the three measurement values is defined as the thickness of the light emitting layer.

The daylighting member 12 can be manufactured by overlapping and laminating film-shaped cellulose acylate (hereinafter, cellulose acylate film) having a saponified surface on the substrate layer 20. The cellulose acylate film may be overlapped and laminated on the substrate layer 20, and then a surface of the cellulose acylate film may be saponified. In a case where the light emitting layer 24 is formed by saponifying the surface of the cellulose acylate film, the unsaponified portion of the cellulose acylate film acts as the interlayer 22.

In a case where a member such as cellophane or PVA which functions alone as the light emitting layer 24 is laminated on the substrate layer 20 using an adhesive, the layer formed of the adhesive acts as the interlayer 22. In addition, in a case where a member which functions alone as the light emitting layer 24 is directly overlapped and laminated on the substrate layer 20 with no adhesive, the interlayer 22 does not exist. Furthermore, in a case where a cellulose acylate film having a saponified surface is laminated on the substrate layer 20 using an adhesive, or in a case where a cellulose acylate film is laminated on the substrate layer 20 using an adhesive, and then a surface of the cellulose acylate film is saponified, the interlayer 22 has a two-layer structure having a layer formed of the adhesive and a layer formed of an unsaponified portion of the cellulose acylate film.

The cellulose acylate film can be manufactured by a known solution film forming method. Specifically, a dope in which cellulose acylate is dissolved in a solvent is cast on a long continuously moving belt to form a cast film, and the cast film is dried, peeled off, and further dried. Whereby, a cellulose acylate film can be manufactured. A drum may be used instead of the belt, and a cast film may be dried on the drum and peeled off to manufacture a cellulose acylate film.

In addition, as well as the above-described solution film forming method, a melt film forming method is known as a method of manufacturing the polymer film. In the melt film forming method, a polymer melted by heating is extruded and cast on a support using a T-die, cooled, and then peeled off, and thus a polymer film is manufactured. The interlayer 22 and/or the light emitting layer 24 may be formed using this melt film forming method. In addition, in a case where the substrate layer 20 has thermoplasticity like TPU, the substrate layer 20 can also be manufactured by the melt film forming method. Furthermore, in a case where the substrate layer 20 is formed of a thermoplastic material such as TPU, the substrate layer 20 and the interlayer 22 and/or the light emitting layer 24 can be manufactured integrally with each other. In this case, the material of the interlayer 22 and/or the light emitting layer 24 may be overlapped and cast on the material of the substrate layer 20.

In addition, the material of the interlayer 22 which has been dissolved or melted may be applied to the substrate layer 20, and dried and/or cooled to form the interlayer 22. The material of the light emitting layer 24 which has been dissolved or melted may be applied to the substrate layer 20 or the interlayer 22, and dried and/or cooled to form the light emitting layer 24.

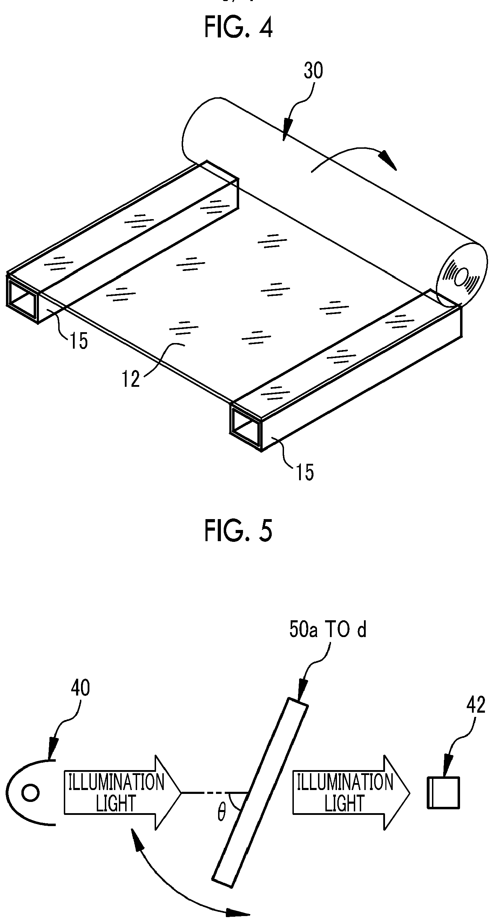

In the above examples, the daylighting member 12 has a hard panel shape (plate shape). However, in a case where the substrate layer 20 is formed of a flexible member such as urethane, the daylighting member 12 may have a flexible sheet shape. In this case, as shown in Fig. 4, the greenhouse 10 may be formed by unwinding the daylighting member 12 from a daylighting member roll 30 in which the long daylighting member 12 is wound into a roll shape and by extending the daylighting member on the frame 11.

In addition, in the above examples, the description has given of the daylighting member 12 used for the greenhouse 10, but the daylighting member can also be used for other agricultural uses. Examples of other agricultural uses include using the daylighting member for daylighting windows of a factory where plants are cultivated, a partition for partitioning from a cultivation portion and a partition, box, or bag for so-called seedling raising for surrounding and raising seedlings in a plant factory using artificial light such as LED.

### Examples

Hereinafter, daylighting members of Examples 1 to 13 in which the present invention is embodied will be described using Tables 1 and 2 with reference to daylighting members of Comparative Examples 1 to 3b and Reference Examples 1 and 2. Table 1 shows the layer configurations of the daylighting members of Examples, Comparative Examples, and Reference Examples, the materials, thicknesses, and equilibrium moisture contents of layers, and the refractive indices of light emitting layers.

**[Table 1]**

| | Substrate Layer | | | Interlayer | | | Light Emitting Layer | | | |
|---|---|---|---|---|---|---|---|---|---|---|
| | Material | Thickness | Equilibrium Moisture Conten | Material | Thickness | Equilibrium Moisture Content | Material | Thickness | Equilibrium Moisture Content | Refractive Index |
| | | µm | % | | µm | % | | µm | % | |
| Example 1 | glass | 3000 | 0 | TAC (1) | 120 | 3.8 | saponified cellulose | 8 | 14 | 1.48 |
| Example 2 | glass | 3000 | 0 | TAC (1) | 120 | 3.8 | saponified cellulose | 3 | 14 | 1.48 |
| Example 3 | glass | 3000 | 0 | TAC (1) | 120 | 3.8 | saponified cellulose | 1 | 14 | 1.48 |
| Example 4 | glass | 3000 | 0 | TAC (2) | 60 | 4.2 | saponified cellulose | 2 | 14 | 1.48 |
| Example 5 | PC | 5000 | 0.4 | TAC (1) | 120 | 3.8 | saponified cellulose | 8 | 14 | 1.48 |
| Example 6 | acryl | 5000 | 0.8 | TAC (1) | 120 | 3.8 | saponified cellulose | 8 | 14 | 1.48 |
| Example 7 | glass | 3000 | 0 | TAC (1) | 120 | 3.8 | PVA (1) | 10 | 10 | 1.45 |
| Example 8 | glass | 3000 | 0 | TAC (1) | 120 | 3.8 | PVA (2) | 10 | 15 | 1.45 |
| Example 9 | glass | 3000 | 0 | pressure sensitive adhesive | 25 | 0.3 | cellophane | 10 | 14 | 1.52 |
| Example 10 | glass | 3000 | 0 | pressure sensitive adhesive | 25 | 0.3 | PVA (1) | 10 | 10 | 1.45 |
| Example 11 | glass | 3000 | 0 | - | - | - | PVA (1) | 10 | 10 | 1.45 |
| Example 12 | TPU | 30 | 0.4 | TAC (2) | 40 | 4.2 | saponified cellulose | 3 | 14 | 1.48 |
| Example 13 | TPU | 70 | 0.4 | TAC (2) | 40 | 4.2 | saponified cellulose | 3 | 14 | 1.48 |
| Example 14 | TPU | 100 | 0.4 | TAC (2) | 40 | 4.2 | saponified cellulose | 3 | 14 | 1.48 |
| Comparative Example 1 | glass | 3000 | 0 | - | - | - | - | | | - |
| Comparative Example 2 | glass | 3000 | 0 | pressure sensitive adhesive | 25 | 0.3 | TPU | 50 | 0.4 | 1.52 |
| Comparative Example 3 | glass | 3000 | 0 | pressure sensitive adhesive | 25 | 0.3 | TAC (2) | 40 | 4.2 | 1.48 |
| Comparative Example 4 | glass | 3000 | 0 | TAC (2) | 60 | 4 | LR layer | 5 | 0 | 1.45 |
| Reference Example 1 | | | | | | | commercially available product A | 100 | 0.7 | 1.45 |
| Reference Example 2 | | | | | | | commercially available product B | 150 | 0.3 | 1.49 |

**[Table 2]**

| | Total Light Transmittance | | | Parallel Transmittance | | | Haze | |
|---|---|---|---|---|---|---|---|---|
| | Dry Film | Water Film | Difference | Dry Film | Water Film | Difference | Dry Film | Water Film |
| | % | % | % | % | % | % | % | % |
| Example 1 | | 93.8 | 2.4 | 91.0 | 93.1 | 2.1 | 0.47 | 0.75 |
| Example 2 | 92.3 | 94.1 | 1.8 | 91.9 | 93.7 | 1.9 | 0.45 | 0.38 |
| Example 3 | 91.5 | 93.0 | 1.5 | 91.1 | 90.7 | -0.4 | 0.43 | 1.05 |
| Example 4 | 92.6 | 94.1 | 1.5 | 92.3 | 93.9 | 1.6 | 0.34 | 0.22 |
| Example 5 | 90.1 | 91.3 | 1.2 | 89.7 | 89.5 | -0.2 | 0.52 | 1.50 |
| Example 6 | 91.7 | 92.7 | 1.0 | 91.3 | 90.5 | -0.8 | 0.46 | 1.20 |
| Example 7 | 91.5 | 92.6 | 1.1 | 90.6 | 87.6 | -3.0 | 0.91 | 4.93 |
| Example 8 | 91.3 | 92.5 | 1.2 | 90.9 | 90.4 | -0.5 | 0.85 | 2.35 |
| Example 9 | 91.4 | 92.0 | 0.6 | 89.6 | 89.2 | -0.4 | 1.96 | 2.93 |
| Example 10 | 90.9 | 91.7 | 0.8 | 90.0 | 87.0 | -3.0 | 1.20 | 5.40 |
| Example 11 | 91.2 | 91.8 | 0.6 | 89.5 | 86.0 | -3.5 | 1.01 | 5.20 |
| Example 12 | 92.6 | 93.8 | 1.2 | 92.3 | 93.6 | 1.3 | 0.32 | 0.25 |
| Example 13 | 92.2 | 93.4 | 1.2 | 92.0 | 93.0 | 1.0 | 0.40 | 0.34 |
| Example 14 | 92.0 | 93.3 | 1.3 | 91.8 | 93.2 | 1.4 | 0.42 | 0.38 |
| Comparative Example 1 | 90.3 | 74.5 | -15.8 | 89.8 | 33.9 | -56.0 | 0.06 | 54.54 |
| Comparative Example 2 | 91.0 | 90.8 | -0.2 | 89.3 | 84.8 | -4.5 | 1.87 | 7.20 |
| Comparative Example 3 | 92.5 | 92.4 | -0.1 | 91.8 | 74.4 | -17.4 | 0.67 | 19.60 |
| Comparative Example 4 | 93.9 | 93.3 | -0.6 | 93.7 | 83.5 | -10.2 | 0.24 | 11.70 |
| Reference Example 1 | 93.2 | 93.5 | 0.2 | 88.1 | 83.3 | -4.8 | 6.20 | 9.50 |
| Reference Example 2 | 91.4 | 91.5 | 0.1 | 71.9 | 49.2 | -22.8 | 21.30 | 47.02 |

The equilibrium moisture content is an equilibrium moisture content at 25°C and a relative humidity of 80%. The equilibrium moisture content was measured by a Karl Fischer moisture meter "AQ-2200" manufactured by HIRANUMA Co., Ltd. after control of the humidity of the sample for 24 hours under the above-described environment. The refractive index was measured by an Abbe refractive index meter after control of the humidity for 24 hours under the environment of 25°C and a relative humidity of 55%. The refractive index of the glass used as the substrate layer was 1.52, the refractive index of the polycarbonate (PC) was 1.59, and the refractive index of the acrylic plate was 1.49. The thermoplastic polyurethane (TPU) was ELASTOLLAN (registered trademark) NY515N11A manufactured by BASF SE, and its refractive index was 1.502. The refractive index of the pressure sensitive adhesive used as the interlayer was 1.483.

In addition, TAC (1) is a material obtained by adding an ester oligomer as an additive to cellulose acetate (acetyl group substitution degree: 2.86, viscosity average polymerization degree: 320), and TAC (2) is a material obtained by adding a sugar ester as an additive to the cellulose acetate.

Furthermore, as Reference Examples 1 and 2, commercially available films for greenhouses of different kinds were used. Reference Example 1 (commercially available product A) is a fluoropolymer F-CLEAN (registered trademark) (manufactured by AGC Green-Tech Co., Ltd.), and Reference Example 2 (commercially available product B) is a polyolefin-based polymer DIASTAR (registered trademark) (manufactured by Mitsubishi Chemical Agri Dream Co., Ltd.). Since these commercially available products (commercially available products A and B) were provided to be used alone as a daylighting member of a greenhouse, the products were used alone without being attached to the substrate layer.

The saponified cellulose layer was formed by saponifying TAC (1) or TAC (2) by a dipping method. As the cellophane, a commercially available cellophane film was used.

As PVA (1), a material obtained by mixing GOHSENX Z-220 (acetoacetyl-modified polyvinyl alcohol (PVA), polymerization degree: 1,200, degree of saponification: 90.5 to 92.5, manufactured by NIPPON SYNTHETIC CHEMICAL INDUSTRY CO., LTD.), NIKALAC MX-035 (manufactured by NIPPON CARBIDE INDUSTRIES CO., INC., methylol melamine resin crosslinking agent), SNOWTEX (registered trademark) O33 (colloidal silica, average primary particle diameter: 10 nm to 15 nm, manufactured by Nissan Chemical Corporation, concentration: 70 mass%), and a p-toluenesulfonic acid (manufactured by Fujifilm Wako Pure Chemical Corporation) at 38:4:50:0.4 was used. As PVA (2), a material obtained by mixing GOHSENX Z-220, NIKALAC MX-035, and a p-toluenesulfonic acid (manufactured by Fujifilm Wako Pure Chemical Corporation) at 90:9:1 was used.

As LR, a material obtained by forming a 5 µm thick layer consisting of a ultraviolet curable resin pentaerythritol tetraacrylate (manufactured by Shin-Nakamura Chemical Co., Ltd.) as a first layer on TAC (2), and forming a 0.1 µm thick layer containing a silica-based hollow particle dispersion sol (manufactured by JGC C&C.: trade name THRULYA 1420, average primary particle diameter: 60 nm) and a ultraviolet curable resin KAYARAD DPHA (manufactured by Nippon Kayaku Co., Ltd.) with a composition ratio of 5:25 as a second layer by the same method as the coating of a hard coating layer described in JP2016-175991A was used.

Next, the total light transmittance, the parallel transmittance, and the haze were measured regarding the daylighting member of each of Examples, Comparative Examples, and Reference Examples. The results are as shown in Table 2. A haze meter "SH7000" manufactured by NIPPON DENSHOKU INDUSTRIES CO., LTD. was used for the measurement. In addition, the measurement was performed in two states, i.e., a state in which the daylighting member was dry (hereinafter, referred to as the dry state) and a state in which a water film is formed by spraying water on the surface (surface of the light emitting layer 24 (inside the greenhouse 10)) (hereinafter, referred to as the wet emitting surface state). Furthermore, a difference in total light transmittance and a difference in parallel transmittance between the two states were calculated.

As shown in Table 2, it was possible to confirm that the daylighting members of Examples 1 to 14 have high total light transmittance (91.3% or greater) and a good daylighting property in both the dry state and the wet emitting surface state. It was also possible to confirm that the daylighting members of Examples 1 to 14 have high parallel transmittance (86.0% or greater) and a good daylighting property in both the dry state and the wet emitting surface state. Furthermore, it was possible to confirm that the daylighting members of Examples 1 to 14 have low haze (5.40 or lower) and a good daylighting property in both the dry state and the wet emitting surface state.

In addition, it was possible to confirm that in the daylighting members of Comparative Examples 1 to 4 and Reference Examples 1 and 2, the daylighting property tends to be reduced or significantly reduced in the wet emitting surface state, but in the daylighting members of Examples 1 to 14, the daylighting property is hardly reduced even in the wet emitting surface state. Specifically, in the daylighting members of Comparative Examples 1 to 4 and Reference Examples 1 and 2, the total light transmittance was 15.8% reduced in the worst case, and only 0.2% increased in the best case, and in the daylighting members of Examples 1 to 14, the total light transmittance was 0.6% increased in the worst case, and 2.4% increased in the best case. In addition, in the daylighting members of Comparative Examples 1 to 4 and Reference Examples 1 and 2, the parallel transmittance was 56.0% reduced in the worst case, and 4.5% reduced in the best case, and in the daylighting members of Examples 1 to 14, the parallel transmittance was 3.8% reduced in the worst case, and 2.1% increased in the best case. Furthermore, in the daylighting members of Examples 1 to 14, the haze was kept low even in the wet emitting surface state, and was not high in the wet emitting surface state as in the daylighting members of Comparative Examples 1 to 4 and Reference Examples 1 and 2.

Next, verification results of the light transmittance in a case where the angle formed between the rays from a light source and the daylighting member is changed will be described using Fig. 5 and Table 3. For verification, as shown in Fig. 5, any one of daylighting members 50a, 50b, or 50c was selectively disposed between a solar lamp 40 and an illuminance meter 42, and the light transmittance was measured while changing the angle of the daylighting member disposed. In the verification, the transmittance of one daylighting member was measured in a dry state (a state in which both sides were dry) and in a wet emitting surface state (a state in which the emitting surface was wet) (the measurement was performed twice on one daylighting member). The angle formed between the rays from the light source and the daylighting member corresponds to the angle (elevation angle) in a case where the light source is looked up from the position on which the light is incident. Therefore, in this specification, the angle formed between the rays from the light source and the daylighting member is referred to as the elevation angle, and is denoted by the reference θ (see Figs. 3 and 5) for description. The elevation angle θ corresponds to "90° - incidence angle (angle formed between normal of incident surface and incident light)".

**[Table 3]**

| | Elevation Angle θ | 80° | 55° | 30° |
|---|---|---|---|---|
| Daylighting Member 50a (single glass layer) | dry | 92% | 92% | 90% |
| | wet emitting surface | 88% | 87% | 76% |
| Daylighting Member 50b (Example 1) | dry | 92% | 92% | 90% |
| | wet emitting surface | 96% | 95% | 93% |
| Daylighting Member 50c (Example 12) | dry | 93% | 92% | 90% |
| | wet emitting surface | 95% | 95% | 92% |

The results are as shown in Table 3. The daylighting member 50a consists only of a glass layer, and is a product in which the present invention is not embodied. The daylighting member 50b is a product according to the present invention in which the same interlayer and light emitting layer as those in the above-described Example 1 (see Tables 1 and 2) are provided on the emitting surface side (on the side of the illuminance meter 42) of the glass layer. The daylighting member 50c is a product according to the present invention in which the same interlayer and light emitting layer as those in the above-described Example 12 (see Tables 1 and 2) are provided on the emitting surface side (on the side of the illuminance meter 42) of the TPU layer.

As shown in Table 3, it was possible to confirm that in the daylighting members 50a to 50c, the smaller the elevation angle, the lower the transmittance in any state. In addition, it was possible to confirm that in the daylighting member 50a in which the present invention is not embodied, the transmittance is reduced (compared with the state in which both sides are dry) at any elevation angle in the wet emitting surface state, whereas in the daylighting members 50b to 50d in which the present invention is embodied, the transmittance is increased (increased compared with the state in which both sides are dry) at any elevation angle in the wet emitting surface state.

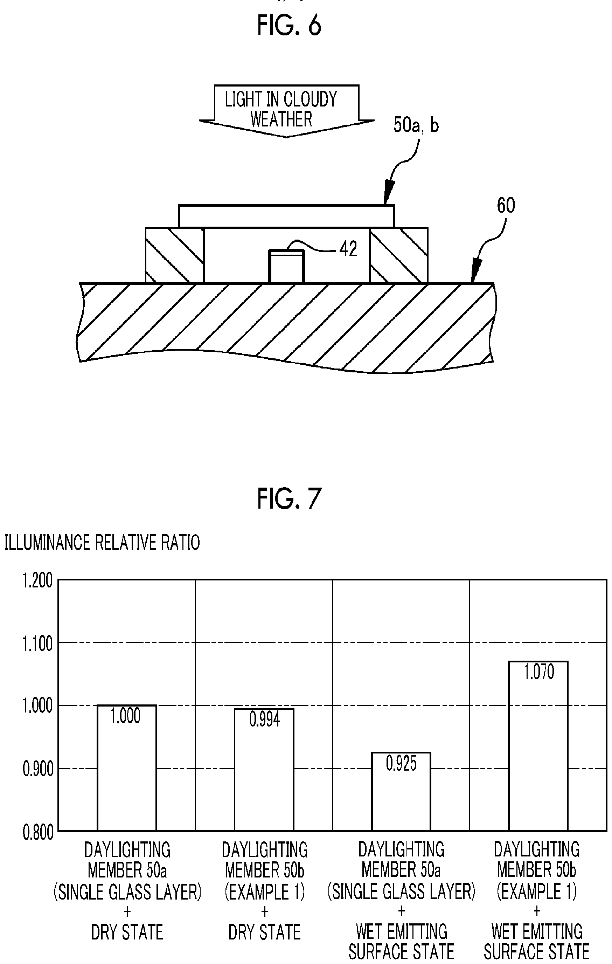

Next, verification of the brightness inside the daylighting member (inside the greenhouse) including scattered light will be described using Figs. 6 and 7. For verification, as shown in Fig. 6, the illuminance meter 42 was installed on a ground surface 60 during the period when scattered light reached the ground surface in cloudy weather, the daylighting members 50a and 50b were disposed parallel to the ground surface 60 above the illuminance meter 42, and relative differences in illuminance with a difference in daylighting member and a difference between the dry state and the wet emitting surface state were investigated.

The results are as shown in Fig. 7. Specifically, on the assumption that the illuminance in a state in which the daylighting member 50a (a single glass layer in which the present invention is not embodied) was in a dry state was 1.000, the illuminance in a state in which the daylighting member 50b (a product in which the present invention is embodied. The same interlayer and light emitting layer as those in Example 1 are provided on the light emitting surface side of the glass layer.) was in a dry state was 0.994, the illuminance in a state in which the daylighting member 50a was in a wet emitting surface state was 0.925, and the illuminance in a state in which the daylighting member 50b was in a wet emitting surface state was 1.070. Through the verification, it was possible to confirm that in a case where the present invention is not embodied, the illuminance is lower in the wet emitting surface state than in the dry state, but in a case where the present invention is embodied, the illuminance is higher in the wet emitting surface state than in the dry state. In addition, it was possible to confirm that in a case where the present invention is embodied, the illuminance in the dry state is slightly reduced as compared to a case where the present invention is not embodied, but the increase in illuminance in the wet emitting surface state greatly exceeds the reduction in illuminance in the dry state.

### Explanation of References

10: greenhouse (agricultural box)
11: frame
11A: body portion
11B: roof
12, 50a to 50d: daylighting member (agricultural daylighting member)
15: aggregate
16: pressing member
17: screw
20: substrate layer
22: interlayer
24: light emitting layer
30: daylighting member roll
40: solar lamp
42: illuminance meter
θ: elevation angle

## Claims

1. An agricultural daylighting member which partitions a growing space for agricultural products from an outside world, and emits light, which has entered from a light incident surface on one side, from a light emitting surface on the other side, comprising:
a transparent substrate layer; and
a transparent light emitting layer provided closer to a light emitting surface side than the substrate layer,
wherein the light emitting layer has water absorbability.

2. The agricultural daylighting member according to claim 1,
wherein the light emitting layer has a refractive index of 1.54 or less.

3. The agricultural daylighting member according to claim 1 or 2,
wherein the light emitting layer has an equilibrium moisture content of 10% or greater at 25°C and a relative humidity of 80%.

4. The agricultural daylighting member according to claim 3,
wherein the substrate layer has an equilibrium moisture content of 2% or less at 25°C and a relative humidity of 80%.

5. The agricultural daylighting member according to claim 4, further comprising:
an interlayer having an equilibrium moisture content of greater than 2% and less than 10% at 25°C and a relative humidity of 80% between the light emitting layer and the substrate layer.

6. The agricultural daylighting member according to any one of claims 1 to 5,
wherein the light emitting layer is formed of cellulose.

7. The agricultural daylighting member according to claim 6,
wherein the light emitting layer is formed by saponifying cellulose triacetate.

8. The agricultural daylighting member according to any one of claims 1 to 7,
wherein the light emitting layer has a thickness of 100 µm or larger and 2,000 µm or smaller.

9. An agricultural box comprising:
the agricultural daylighting member according to any one of claims 1 to 8; and
a frame which supports the agricultural daylighting member.
